# EUROPEAN PATENT APPLICATION

(11) **EP 2 679 797 A1**
(43) Date of publication of application: **01.01.2014**
(21) Application number: 12290206.7
(22) Date of filing: 25.06.2012
(51) Int. Cl.: F02M 35/10, B29C 49/04, B29C 49/20

(54) **Duct part of the pipe system for a fluid, method and apparatus for manufacturing a duct part of a pipe system**

(71) Applicant: MANN + HUMMEL GMBH, 71638 Ludwigsburg (DE)
(72) Inventor: Girard, Dominique, 53970 Montigné le Brillant (FR); Sarrazin, Maxime, 53260 Entrammes (FR)

(57) **Abstract**

The present invention relates to a duct part (10) of a pipe system for a fluid, in particular a gas or a liquid, in particular of an air intake system of an internal combustion engine, in particular of a motor vehicle. Further the invention relates to a method and an apparatus for manufacturing a duct part (10). The duct part (10) has at least one blow-molded line section (12) for bearing the fluid. Further the duct part (10) has at least one connection section (14) for connecting the duct part (10) to another duct part of the pipe system or to an housing. The at least one line section (12) is molded over at least one frame section (18) of the duct part (10).

## Description

### Technical Field

The present invention relates to a duct part of a pipe system for fluid, in particular gas or liquid, in particular of an air intake system of an internal combustion engine, in particular of a motor vehicle, having at least one blow-molded line section for bearing the fluid and having at least one connection section for connecting the duct part to another duct part of the pipe system or to an housing.

Further, the present invention relates to a method for manufacturing a duct part of a pipe system for fluid, in particular gas or liquid, in particular of an air intake system of an internal combustion engine, in particular of a motor vehicle, wherein a parison is made of plastic, the parison is blow-molded in a blowing mold to a line section for bearing the fluid.

Finally, the present invention relates to an apparatus for manufacturing a duct part of a pipe system for fluid, in particular gas or liquid, in particular of an air intake system of an internal combustion engine, in particular of a motor vehicle, comprising means for realizing a parison of plastic, means for blow molding the parison in a blowing mold to a line section for bearing the fluid.

### State of Technology

An air intake system of an internal combustion engine known from the market has a duct part with a blow-molded line section made of plastic. In operating state, the air flows through the line section. The line section is featured with a connection section with a shell at each end. Sometimes it is necessary, that the performance of the duct part varies along its length and/or its circumference. In particular it can be necessary, that the duct part has flexible areas and rigid areas.

It is an object of the invention to provide a duct part of a pipe system, a method and an apparatus for manufacturing a duct part of the above-mentioned kind, which can easy be realized, whereby the performance of the duct part can be improved.

### Disclosure of Invention

The object is achieved by that the at least one line section is molded over at least one frame section of the duct part.

According to the present invention, the duct part has two components, namely the at least one line section and the at least one frame section. The at least one frame section can be placed on the inner surface or on the outer surface of the at least one line section. The at least one frame section also can be at least partly embedded in the material of the at least one line section. In particular the duct part has at least one connection section. So the duct part can be connected to another part of the pipe system. With the duct part two other parts of the pipe system can be connected. For this purpose, the duct part can have a connection section on each end. In particular two other duct parts of the pipe system can be connected by the duct part. Alternative one other duct part of the pipe system can be connected with a housing, in particular of a filter. The duct part according to the invention can also be an end piece of the pipe system, so that only one end of the duct part can be connected with another part of the pipe system. The main function of the at least one line section can be to bear fluid. For this it can be optimized for being tight. Advantageously, the at least one line section can be flexible. So the at least one line section can compensate movements between the parts of the pipe system which are connected by the duct part. Displacements can be compensated. Further the at least one line section can compensate vibrations. In addition the at least one line section can compensate tolerances of the mounting positions of the parts of the pipe system which are connected by the duct part. So an exchange of the duct part can be simplified. Favorably, the at least one line section can be elastic. Particularly, the material and/or the shape of the at least one line section can be optimized for tightness and/or flexibility.The main functions of the at least one frame section can be to support the at least one line section and/or to reduce noise during operation of the pipe system. For this, the at least one frame section can be rigid. Favorably the at least one frame section can be arranged in areas of the duct part which need a mechanical stabilization. So deformations in particular due to pressure differences between the interior and the exterior of the air duct can be diminished or avoided. Such pressure differences can be caused by a vacuum or a overpressure. In addition, mounting components such as brackets can be connected to the at least one frame section. Advantageously, with the mounting components the duct part can be fixed at a framework particularly of an internal combustion engine. With the mounting components also other parts, in particular cables, can be fixed at the duct part. Particularly, the material and/or the shape and/or the position of the at least one frame section can be optimized for stabilization of the duct part and/or for noise reduction. Particularly, the at least one frame section can contain at least a part of the at least one connection section. In this way, a rigid connection section, in particular a connection sleeve, can be realized. Additionally or alternatively the at least one line section can contain at least a part of the connection section. Thus a flexible connection section can be realized.

According to a favourable embodiment of the invention, the at least one frame section and the at least one line section can be fixed to each other by positive locking and/or nonpositive connection and/or material engagement. Particularly, the at least one frame section can be placed in an indentation of the at least one line section. The indentation can be realized during a molding process. Favorably, a plasticized parison can be blow-molded in a blowing mold to the at least one line section. Thereby the plastic material of the parison can embed the at least one frame section so that the indentation is being shaped. In this way, the positive locking can be realized. A nonpositive connection can be realized in particular by use of a frame section which has diagonally arranged surfaces. Between those surfaces the at least one line section can be clamped. A clamping force can be realized in that during the molding process the diagonally arranged surfaces of the plasticized at least one line section is pressed against the corresponding surface of the at least one frame section. Therefore the at least one line section can be inflated by injecting gas. Alternatively the at least one line section can have diagonally arranged surfaces and the at least one frame section can be clamped between those corresponding surfaces of the at least one line section. During a hardening process the at least one line section can shrink for realizing the clamping force. The material engagement can be realized by fusing the materials of the at least one line section and the at least one frame section together. The fusion of the materials can be caused by the contact of the plasticized material of the at least one line section with the material of the at least one frame section. The fusion can be improved by the surface compression load due to an expansion or a shrinkage of the at least one line section. The material engagement can also be realized by gluing or welding. The material engagement can be realized additionally or alternatively to the nonpositive connection and/or the positive locking connection.

According to a further favourable embodiment of the invention, the at least one frame section can have a shell and the at least one line section can be blow-molded over the radial inner circumferential side or over the radial outer circumferential side of the shell. The shell can be a kind of hollow cylinder. The hollow cylinder can be straight or bent. A shell can have diagonally arranged surfaces. So the fixation between the at least one frame section and the at least one line section can be improved. A shell which is closed in circumferential direction can realize a circumferential stabilization of the at least one line section. Thereby the at least one line section can be in the interior of the shell. Alternative the shell can be in the interior of the at least one line section. The shell can also be a partial shell which is open on one circumferential side.

Advantageously, the at least one frame section can have at least one curve. In this way, the shape of the at least one frame section can be adapted to a curved shape of the at least one line section. Thus, a curved portion of the duct part can be stabilized by the at least one frame section.

Favorably, the duct part can have at least one elbow and the at least one frame section can be placed within the elbow. The at least one frame section can stabilize the elbow. The at least one frame section can avoid that the at least one line section can be bent down within the elbow. By use of the at least one frame section, the realization of the elbow can be simplified.

Advantageously, the at least one frame section and the at least one line section can be made of different materials. Favorably the at least one frame section can be of a rigid material. In particular the at least one frame section can be of Polypropylene (PP). The at least one line section can be soft and/or flexible. Favorably, the at least one line section can be made of a soft and/or flexible material. Favorably, the at least one line section can be made of an elastic material. In particular, the at least one line section can be made of a combination of PP and Ethylene-propylene-diene-monomer (EPDM). Advantageously the at least one line section can have a bellows, which is arranged in longitudinal direction of the at least one line section beyond the at least one frame section. A bellows allows a elastic deformation of the at least one line section.

The object is further achieved by the method by that at least one frame section is arranged between a wall of the parison and a surface of the blowing mold, then the parison is blow-molded in or on the blowing mold, whereby the line section is molded over the at least one frame section.

All features and advantages of the above-mentioned inventive duct part apply analogous to the inventive method and its favorable embodiments. Advantageously, plasticized plastic material can be extruded to the parison. In particular, the at least one frame section can be placed in the exterior of the parison, the parison and the at least one frame section can be placed in a cavity-like blowing mold and the parison can be inflated by injection of gas. Favorably, the at least one frame section can be a shell. The shell can be closed in circumferential direction. Favorably the parison can be placed in the interior of the shell. Alternatively, the at least one frame section can be placed in the interior of the parison, the parison and the at least one frame section can be placed on the core-like blowing mold and gas, which is in the interior of the parison, can be exhausted for blow molding. Favorably, at least one connection section for connecting the duct part to another duct part of the pipe system or to an housing can be realized with the line section and/or the frame section. Advantageously, the parison can be bent to an elbow before blow molding in the blowing mold. Favorably, the at least one frame section can be placed within the elbow.

The object is finally achieved by the apparatus by means for arranging at least one frame section between a wall of the parison and a surface of the blowing mold before the parison is blow-molded in the blowing mold.

All features and advantages of the above-mentioned inventive duct part and the above-mentioned inventive method apply analogous to the inventive apparatus and its favorable embodiments. Favorably, the blowing mold can have a cavity. Alternatively the blowing mold can have a core. Advantageously, the apparatus can contain means for bending the parison to an elbow before it is blow-molded in the blowing mold. Favorably, the means for bending the parison can be realized additionally for placing the at least one frame section within the area for forming the elbow. In particular the means for bending the parison can be realized for turning the at least one frame section. Advantageously, the means for bending the parison can contain a pivoted arm. Advantageously, the blowing mold can have an indentation for the at least one frame section. The at least one frame section can be positioned in the indentation. The dimensions of the indentation can accord with the dimensions of the at least one frame section. In this way, the outline of the surface of the at least one frame section facing to the at least one line section can fade to the outline of the accordant surface of the blowing mold besides the indentation.

### Brief Description of Drawings

The present invention together with the above-mentioned and other objects and advantages may best be understood from the following detailed description of the embodiments, but not restricted to the embodiments, wherein is shown schematically
- Figure 1: a lateral view of a duct part of an air intake system of an internal combustion engine of a motor vehicle;
- Figure 2: an apparatus for manufacturing the duct part of figure 1 in an early production stage;
- Figure 3: the apparatus of figure 2 in a further production stage;
- Figure 4: the apparatus of figures 3 in a later production stage.

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

### Embodiment(s) of Invention

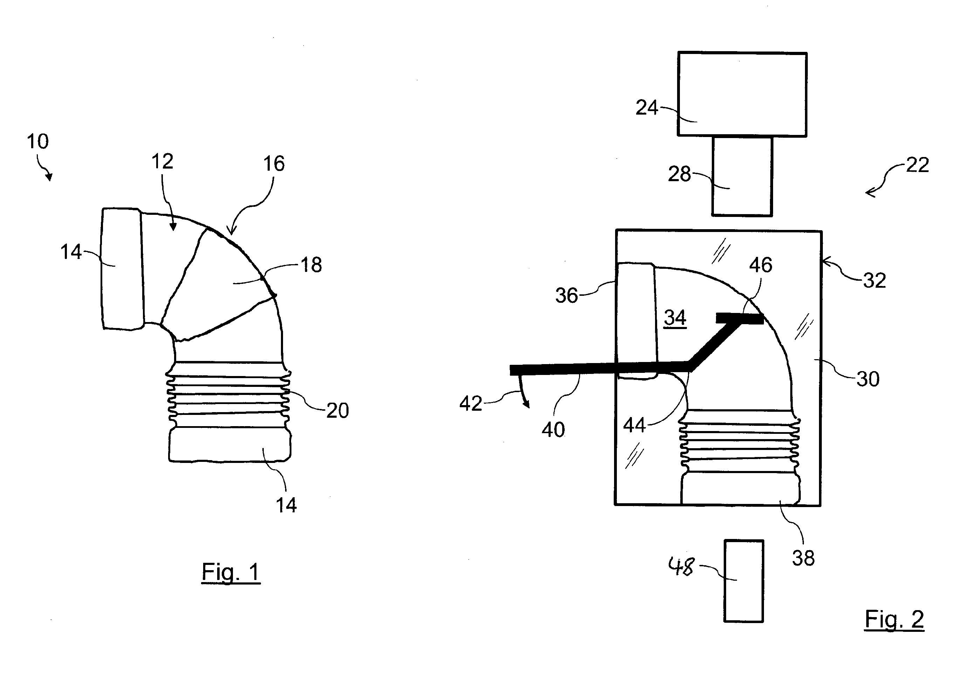

Figure 1 depicts a duct part 10 of an air intake system of an internal combustion engine of a motor vehicle.

The duct part 10 has at a blow-molded line section 12 for bearing the air. The line section 12 is a soft, elastic part. Favorably it is made of PP and EPDM.

The duct part 10 has two connection sections 14 in the form of shells for connecting the duct part 10 with one end to another not shown duct part of the air intake system and with the other end to a not shown housing of an air filter. The connection sections 14 are arranged in one piece at the ends of the line section 12 each.

The duct part 10 has an elbow 16. The elbow 16 realizes a curve of 90 degree. Within the elbow 16, a curved shell 18 is placed on the radial outer circumferential side of the line section 12. The shell 18 realizes a frame section of the duct part 10. The shell 18 and the line section 12 are made of different materials. The shell 18 is a rigid part. Favorably it is made of PP. The shell 18 surrounds the radial outer circumferential side of the line section 12. The line section 12 is blow-molded over the radial inner circumferential side of the shell 18. With the shell 18, particularly in the area of the elbow 16, the duct part 10 is stabilized. Outside the shell 18, particularly in the area of a bellows 20, the duct part 10 is flexible. The bellows 20 is realized in a straight area of the line section 12 between the elbow 16 and one of the connection sections 14.

The shell 18 and the line section 12 are fixed to each other by a combination of positive locking and nonpositive connection.

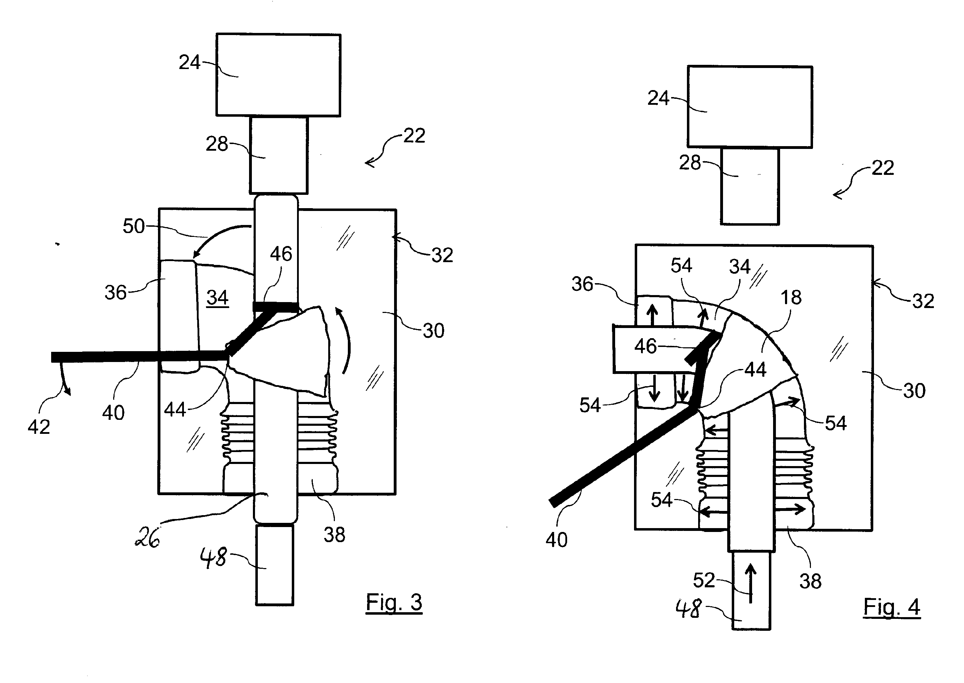

In figures 2 to 4 an apparatus 22 for manufacturing the duct part 10 is depicted in different production stages. The apparatus 22 comprises an extruder 24 for extruding a parison 26 of the plastic, namely PP and EPDM, for realizing the line section 12. The parison 26 is shown in figures 3 and 4. The extruder 24 has an injector 28 for injecting the plastic material to the parison 26. The injector 28 is vertically aligned.

Below the injector 28 a backmost half shell 30 of a blowing mold 32 is placed. An inner surface 34 of a cavity of the blowing mold 32 has the shape of the later duct part 10. The backmost half shell 30 is vertically aligned, so that a form section for one of the connection sections 14 of the later duct part 10 opens out into a side opening 36 in a vertical side of the blowing mold 32. A form section for the other connection section 14 opens out into a bottom opening 38 in a bottom side of the blowing mold 32. A virtual axis of the bottom opening 38 is vertically aligned. Favorably the virtual axis of bottom opening 38 can be a bit farther from the inner surface 34 in the form section for the later connection section 14 than the virtual axis of the injector 28.

The apparatus 22 further has a pivot arm 40 for holding and positioning the shell 18 during the blow molding process. The pivot arm 40 is movable relative to the blowing mold 32. A turn direction of the pivot arm 40 is indicated in figure 2 and 3 with an arrow 42. In an initial state a holding means 44 of the pivot arm 40 is placed in front of the inner surface 34 of the backmost half shell 30 nearby a form section for the elbow 16 of the duct 10. During the production process, the shell 18 is held with the holding means 44. With the holding means 44 the shell 18 can be arranged between a wall of the parison 26 and the inner surface 34 of the blowing mold 30. By pivoting the arm 40 the shell 18 can be turned with the holding means 44 for placing it within the form section for the elbow 16.Next to the holding means 44 a clip 46 is attached to the pivot arm 40. The clip 46 is for holding a top portion of the parison 26. By pivoting the arm 28 the top portion of the parison 26 can be bent to the elbow 16.

Additionally, the apparatus 22 comprises an air tube 48. The air tube 48 is placed below the blowing mold 32. With the air tube 48 air can be blown into the parison 26 for inflating it into the shape of the line section 12. The air tube 48 is connected with a not shown compressor. An opening of the air tube 48 is opposite to the bottom opening 38 of the blowing mold 32.

A method for manufacturing the duct part 10 will be illustrated with the help of figures 2 to 4.

At first the blowing mold 32 is open so that the cavity with the inner surface 34 of the backmost half shell 30 is accessible. The pivot arm 40 with the holding means 44 and the clip 46 are in their starting position. This is shown in figure 2.

The pre-casted shell 18 is mounted at the holding means 44 as shown in figure 3. The plastic material is extruded by the extruder 24 and the injector 28 to the parison 26. In this production stage the plasticized parison 26 is hanging from the injector 28 straight downward. The parison 26 leads through the shell 18. The clip 46 is holding the top portion of the parison 26. A bottom end of the parison 26 is connected with the air tube 48. Favorably, the plastic material of the parison 26 is pliable at such a rate that the parison 26 can be bend by a bending force and can be inflated by injection of air for blow molding. On the other hand the plasticized plastic material is hard enough for the parison 26 cannot collapse or bend round under the influence of gravitation.

A not shown bottom part of a front half shell of the blowing mold 32 is mounted at the bottom section of the backmost half shell 30, so that the blowing mold 32 there is closed. A bottom portion of the parison 26, which later contains the bellows 20, is enclosed in the bottom portion of the cavity of the blowing mold 32. For the sake of clarity, the bottom part of the front half shell is not shown in the figures.

The pivot arm 40 is pivoted in turn direction 42 as illustrated in figure 3. Thereby the top portion of the parison 26 is bent toward the side opening 36 of the blowing mold 22 for realizing the later elbow 16. Thereby the free end of the top portion of the parison 26 is separated from the injector 28. The free end of the top portion is closed somehow or other. Thus, in a later production stage described below, where the parison 26 is inflated by injection of air, the air cannot exhaust through this free end. The direction of bending is illustrated in figure 3 by an curved arrow 50. In consequence of pivoting the arm 40 the shell 18 is arranged within the form section of the blowing mold 32 for the elbow 16. The top portion of the parison 26 and the shell 18 are placed in the cavity of the backmost half shell 30, whereby the radial outer surface of the shell 18 is positioned at the inner surface 38 of the cavity of the backmost half shell 30. This production stage is shown in figure 4.

The pivot arm 40 with the holding means 44 and the clip 46 is removed from the blowing mold 32. A top part of a front half shell is mounted on the top section of the half shell 30. For the sake of clarity, the top part of the front half shell is not depicted. The complete parison 26 and the shell 18 in this production stage are fully enclosed by the blowing mold 32. The wall of the shell 18 is arranged between a wall of the parison 26 and the inner surface 38 of the cavity of the blowing mold 32.

Air is blown through the air tube 48 into the interior of the parison 26. An air flow is illustrated in figure 4 by an arrow 52. The parison 26 is inflated. This is illustrated by arrows 54. Its walls are pressed against the inner surface 34 of the cavity of the blowing mold 32 and against the radial inner circumferential side of the shell 18. The parison 26 is formed to the line section 12. Thereby the line section 12 is molded over the shell 18. The plastic material of the line section 12 encloses the shell 18. The line section 12 obtains an indention formed by the shell 18. The shape of the indention realizes the positive locking between the shell 18 and the line section 12. Since the plastic material of the line section 12 is pressed closely against the radial inner circumferential side of the shell 18, additionally the nonpositive connection between the line section 12 and the shell 18 is realized. After cooling and hardening the line section 12, the blowing mold 32 is opened and the duct part 10 with the hardened line section 12 and the overmolded shell 18 is removed. The free end of the top portion of the air duct 10 is opened. For example the closed section is cut off.

The invention is not limited to an air intake system of an internal combustion engine of a motor vehicle. The invention can also be applied to other kinds of pipe systems for fluids, in particular gases or liquids. The invention can further be applied to other kinds of internal combustion engines, particularly industrial combustion engines.

The duct part 10 can have more than one blow-molded line sections.

The duct part 10 can have more or less than two connection sections for connecting the duct parts 10 to another duct part of the air intake or to an housing. The connection sections can be different to the connection sections 14.

The duct part 10 can have more than one frame section, in particularly more than one shell 18.

Instead of the shell 18, also a different kind of frame section can be used. For example a straight frame section or frame section which is not closed in circumferential direction can be used.

The duct part 10 can have more or less than one elbow 16. Instead of or additional to the elbow 16, the duct part 10 can have at least one different curve.

The frame section, particularly the shell 18, can also be placed in the interior of the line section 12. The line section 12 can then be blow-molded over the radial outer circumferential side of the shell 18.

The shell 18 or a different frame section can also contain at least one part of a connection section.

The line section 12 can also be made of a soft, flexible material different from PP and EPDM. Particularly it can be made of a different kind of plastic or another flexible and/or elastic material.

The shell 18 can also be made of a rigid material different from PP. For example it can be made of metal or a different kind of plastic.

Instead of or alternative to the combination of positive locking and nonpositive connection the shell 18 and the line section 12 can be fixed by material engagement. For example the materials of the shell 18 and the line section 12 can be fused. They also can be glued or welded. The shell 18 and the line section 12 can also be connected by a different combination of positive locking and/or nonpositive connection and/or material engagement.

Instead of the extruder 24 the apparatus 22 can comprise different means for blow molding the parison 26 in the blowing mold 32 to the line section 12.

The backmost half shell 30 of the blowing mold 32, which is shown in figures 2 to 4, can also consist of a top part and a bottom part according to the above described front half shell. The two bottom parts favorably can comprise the form section for the bellows 20. The two top parts can comprise the form section for the elbow 16. For manufacturing the duct part 10, the two bottom parts of the half shells can be closed around the bottom portion of the parison 26. Then the top portion of the parison 26 can be bent and the shell 18 can be turned by the pivot arm 40. After that, the two top parts of the half shells can be closed around the top portion of the parison 26 and the shell 18. Finally, the parison 26 can be inflated by injecting the air.

An alternative blowing mold can have an indentation for the shell 18. The dimensions of the indentation can accord with the dimensions of the shell 18. In this way, the outline of the radial inner surface of the shell 18 facing to the line section 12 can continuously merge into the outline of the inner surface 34 of the cavity of the blowing mold 30 besides the indentation.

## Claims

1. Duct part (10) of a pipe system for fluid, in particular gas or liquid, in particular of an air intake system of an internal combustion engine, in particular of a motor vehicle, having at least one blow-molded line section (12) for bearing the fluid and having at least one connection section (14) for connecting the duct part (10) to another duct part of the pipe system or to an housing, **characterized by** that, the at least one line section (12) is molded over at least one frame section (18) of the duct part (10).

2. Duct part according to claim 1, **characterized in that** the at least one frame section (18) and the at least one line section (12) are fixed to each other by positive locking and/or nonpositive connection and/or material engagement.

3. Duct part according to claim 1 or 2, **characterized in that** the at least one frame section has a shell (18) and the at least one line section (12) is blow-molded over the radial inner circumferential side or over the radial outer circumferential side of the shell (18).

4. Duct part according to one of the previous claims, **characterized in that** the at least one frame section (18) has at least one curve.

5. Duct part according to one of the previous claims, **characterized in that** it has at least one elbow (16) and the at least one frame section (18) is placed within the elbow (16).

6. Duct part according to one of the previous claims, **characterized in that** the at least one frame section (18) and the at least one line section (12) are made of different materials.

7. Method for manufacturing a duct part (10) of a pipe system for fluid, in particular gas or liquid, in particular of an air intake system of an internal combustion engine, in particular of a motor vehicle, wherein a parison (26) is extruded of plastic, the parison (26) is blow-molded in a blowing mold (32) to a line section (12) for bearing the fluid, **characterized by** that, at least one frame section (18) is arranged between a wall of the parison (26) and a surface (34) of the blowing mold (32), then the parison (26) is blow-molded in or on the blowing mold (32), whereby the line section (12) is molded over the at least one frame section (18).

8. Apparatus (22) for manufacturing a duct part (10) of a pipe system for fluid, in particular gas or liquid, in particular of an air intake system of an internal combustion engine, in particular of a motor vehicle, comprising means (24, 28) for realizing a parison (26) of plastic, means (48) for blow molding the parison (26) in a blowing mold (32) to a line section (12) for bearing the fluid, **characterized by** means (40, 44) for arranging at least one frame section (18) between a wall of the parison (26) and a surface (34) of the blowing mold (32) before the parison (26) is blow-molded in the blowing mold (32).
